(19) Europäisches Patentamt
European Patent Office
Office européen des brevets

(11) **EP 4 260 934 A1**

(12) **EUROPEAN PATENT APPLICATION**

(43) Date of publication:
**18.10.2023 Bulletin 2023/42**

(21) Application number: **23167399.7**

(22) Date of filing: **11.04.2023**

(51) International Patent Classification (IPC):
**B01J 19/00** (2006.01)     **B05B 1/30** (2006.01)
**F15D 1/00** (2006.01)     **B01J 19/26** (2006.01)
**B01J 4/00** (2006.01)

(52) Cooperative Patent Classification (CPC):
**B01J 19/008; B01J 4/007; B01J 19/26; B05B 1/30;**
F15D 1/025

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.04.2022   IT 202200007307**

(71) Applicant: **Hyres S.r.l.**
**82100 Benevento (IT)**

(72) Inventors:
• **ALBANESE, Lorenzo**
**59015 SEANO (Prato) (IT)**
• **CENTRITTO, Mauro**
**50141 FIRENZE (IT)**
• **MENEGUZZO, Francesco**
**56028 SAN MINIATO (Pisa) (IT)**

(74) Representative: **Rambelli, Paolo et al**
**Jacobacci & Partners S.p.A.**
**Corso Emilia 8**
**10152 Torino (IT)**

(54) **APPARATUS FOR DYNAMICALLY REGULATING HYDRODYNAMIC CAVITATION PROCESSES AND RELATED PROCESS**

(57)     Reactor for hydrodynamic cavitation processes of a fluid, including:
- a body (VO) defining a flux path for the fluid subjected to cavitation and provided with an inlet (IN) and an outlet (OUT) for the fluid, and
- at least one cavitation unit defining a restriction (vTh) of the flux area, interposed in the flow path between inlet and outlet,
- characterized in that said at least one cavitation unit is configured in such a way to define a restriction (vTh) with a variable flow area, with the provision of actuator means (cM, tn', tn") with manual or motorized drive, which are set up to change the flow area of the restriction between a maximum flow area and a plurality of configurations with reduced flow area in comparison with the maximum flow area, preferably maintaining the geometric similarity of the geometric shapes defining the flow area. The coupling of several single units, if realized in parallel, can form a multiple-holes plate, while if realized in series, can form a Venturi tube or a series of Venturi tubes. The reactor allows the dynamic and continuous regulation of the hydrodynamic cavitation processes, thereby increasing the efficiency and the application fields of the processes.

fig. 7

EP 4 260 934 A1

# Description

## Scope of the invention

The present invention relates to an apparatus, a cavitation reactor and the process using it, aimed at the dynamic and continuous regulation of hydrodynamic cavitation processes, avoiding the machine and process downtimes, capable of substantially increasing the efficiency and flexibility of transformation processes in all technical fields in which hydrodynamic cavitation techniques can be applied.

In detail, the invention relates to an apparatus and its method of operation, which makes it possible to implement different types of hydrodynamic cavitation reactors, for example in the form of an orifice plate or a Venturi tube or several Venturi tubes in series, capable of ensuring maximum intensity and efficiency of the cavitation processes, as well as to dynamically control and regulate the hydrodynamic cavitation processes through the continuous adjustment of the reactor geometry.

## A brief outline of the known technique

The phenomena of hydrodynamic cavitation in liquid media or liquid-solid mixtures, even with the presence of gas, consist of the creation, growth, and implosion of vapour-filled bubbles at temperatures below boiling point, such implosions being associated with intense releases of energy in the form of heat, pressure waves and hydraulic jets, as well as with the generation of highly oxidative radical species [1]. The production and control of cavitation phenomena in the same media represent a particularly effective way of concentrating the kinetic energy of the circulating medium in a series of distributed micro-reactors, which in turn induce and substantially accelerate physicochemical and biological reactions.

Among the forms of cavitation, hydrodynamic cavitation is the most energy-efficient and the most directly scalable one, consisting of local acceleration of the flow, leading to pressure drops and the formation of micro- and nano-bubbles that later collapse at the pressure recovery [2]. Among the hydrodynamic cavitation techniques, those based on static reactors, such as orifice plates or Venturi tubes, offer the greatest robustness, reliability, and scalability and, at the same time, wide margins for optimisation based on the search for the most suitable geometries.

Hydrodynamic cavitation methods and related apparatuses are applicable, as single-unit operation systems or in line with other systems, in many technical fields. One relevant technical field is the sustainable, green, and efficient extraction of macronutrients and micronutrients from natural biological products of both plant and animal origin. Other technical fields are, for example, the remediation of wastewater, the disinfection of water and food liquids, the treatment of biomass aimed, for example, to generate biogas or to the extraction of cellulose for the paper industry and other industrial sectors, the pasteurisation and sterilisation of foodstuffs and in particular food liquids, the creation of ultra-stable emulsions, and many others [3]. In all the technical fields in which they are applicable, hydrodynamic cavitation processes show superior efficiency, cost-effectiveness and scalability, and distinct advantages over competitive techniques, for the intensification of physicochemical phenomena and reactions, making it possible, among other things, to efficiently exploit under-utilised biological resources or waste products from agrifood and forestry processing [4].

In some cases, it has been verified that the application of hydrodynamic cavitation methods allows completely new products endowed with high added value to be obtained, for example in the case of the extraction of citrus fruit parts [5-9].

Phenomena associated with hydrodynamic cavitation processes activated due to the passage of fluids, for example liquids or liquid-solid mixtures, driven by a pump, through a restriction, placed in a stationary, i.e., non-rotating, cavitation reactor of various nature and form, such as a Venturi tube or a orifice plate, have been known in detail since at least 1990 [10]. In particular, it is known that, for all stationary, i.e., non-rotating, cavitation reactors, the characteristics of hydrodynamic cavitation phenomena can be described using a dimensionless quantity, known as the cavitation number (CN), such that the same cavitation phenomena occur for values of CN below a certain level. The aforesaid level, also known as the cavitation trigger number, for example, equal to or close to 1, and sometimes even up to 4, depends on the nature, shape and geometrical characteristics of the cavitation reactor and the characteristics and composition of the circulating liquid or liquid-solid mixture.

The aforesaid CN parameter is expressed as in equation (1):

$$CN = (P_0 - P_v) / (0.5 \cdot \rho \cdot u^2) \qquad (1)$$

where $P_0$ is the average pressure downstream of the reactor (e.g., equal to the atmospheric pressure), $P_v$ is the vapour pressure of the liquid, $\rho$ is the density of the liquid and $u$ is the flow velocity at the restriction, the latter quantity u being determined based on the flow rate and the pressure of the aforementioned pump connected to the cavitation reactor, as well as based on the design of the hydraulic system.

For CN values falling between a certain level, in particular between a minimum level known as the supercavitation number (SCN), and the aforesaid cavitation trigger number, the cavitation is developed, i.e., the bubbles that form at the restriction grow and later implode violently during their transport within the circulating liquid.

On the contrary, for CN values lower than SCN, the aforementioned bubbles grow until they aggregate and form a flow zone that is practically stationary and consists mainly of vapour. The value of SCN, for example close to 0.1, and sometimes even lower, depends on the nature, shape and geometrical characteristics of the cavitation reactor, and on the characteristics and composition of the circulating liquid. The aforesaid value of SCN can be identified, not only by direct observation of the cavitation zone, but also as that level of CN such that decreasing it further by increasing the pressure produced by the pump, and thus increasing the value of the term u in Equation (1), does not further increase the level of the liquid flow rate or the liquid-solid mixture.

It is known that, for the same total cross-sectional area of the restrictions, the intensity and cavitational yield, and thus the overall yield of the technical processes, increase with the ratio of the perimeter of the restrictions (p1) to the perimeter of the main hydraulic conduit (p2) [11]. Correspondingly, the cavitation regime can be described by a modified Cavitation Number mCN as in Equation (2):

$$mCN = CN / (p1/p2) \qquad (2)$$

With the same total cross-sectional area of the restrictions, the aforementioned ratio $p1/p2$ can be increased, in an orifice plate, simply by increasing the number of holes, as well as, in both an orifice plate and a Venturi tube, by means of restriction geometries that ensure a higher ratio between the perimeter and the cross-sectional area of the restrictions.

One purpose of the invention is to provide a cavitation reactor that allows the transition, within the same process, from one specific hydrodynamic cavitation regime to any other regime, thus enabling the optimisation of a single plant for different production processes or for distinct stages of the same production process. This avoids the need to replace the reactor, thus allowing the continuity of the processes or the process steps, simplifies plant management, and leads to the optimisation of products obtained for which, within the known art, several plants would be needed, or the replacement of essential parts of the plants themselves would be needed.

A further purpose of the invention is to provide a reactor that enables the time and costs of processes based on hydrodynamic cavitation phenomena to be significantly reduced through the dynamic regulation and optimisation of hydrodynamic cavitation processes, due in part to the reactor cross-section (which is preferably triangular shaped, as mentioned below) and the possibility of setting up both different types of cavitation reactors and, within a specific type of reactor, a virtually unlimited number of configurations.

Furthermore, another purpose of the invention is to reduce plant costs, in all technical fields where techniques based on hydrodynamic cavitation phenomena are used or usable.

Developed cavitation regimes are particularly suitable for water remediation and the extraction of compounds from biological matrices. Supercavitation regimes are also particularly suitable for the disinfection of water and food liquids due to their superior antimicrobial ability, e.g., against colonies of bacteria, spores, moulds, and fungi. For example, in the case of the extraction of natural products, the alternation of developed cavitation regimes and supercavitation regimes during the same process has been suggested, to allow maximum efficiency in both the extraction of biologically active compounds and disinfection against pathogenic and spoilage microorganisms. For example, the alternation of cavitation regimes during the same process has been suggested to produce grain-based beverages [12] and oilseed-based beverages [3].

Summary of the Invention

Given the above-mentioned purposes, an object of the invention is a cavitation reactor having the characteristics defined in the following claims, which form an integral part of this description.

In an embodiment, the invention foresees the coupling of several cavitation units, from a minimum of 1 to an indefinite maximum; each of the above-said units defining a flow area restriction, the contour of which is susceptible to be changed employing manual or motor-driven actuator means. Such actuating means are arranged to change the flow area of the restriction between a configuration of maximum flow area (maximum aperture) and a plurality of configurations of reduced flow area in comparison with the configuration of maximum flow area, preferably while maintaining intact the geometric shape of the area itself, i.e., maintaining the geometric similarity of the geometric shapes defining the flow area.

The geometric shape of the restriction flow area is not binding and can be any closed geometric shape, e.g., polygonal, equilateral polygonal shapes, or e.g., elliptical. Particularly preferred is the triangular shape, in particular equilateral triangles.

In particular, the triangular shape is preferred because, for such a shape, the ratio $p1/p2$ in equation (2) above is close to the maximum for the same cross-sectional area of the restriction, so its choice increases the cavitational intensity and yield. Thus, in the hydrodynamic cavitation reactor according to the invention, the triangular geometrical shape of the restriction is convenient compared to other geometrical shapes.

In a preferred embodiment, the cavitation unit has a plurality of linearly translatable shutter bodies, which jointly define the contour of the geometric shape of the restriction, and the actuating means are arranged to simultaneously cause the translation of the shutter bodies between the maximum opening position of the restriction and a plurality of restricted opening positions.

In one form of embodiment, the actuators include a rotary gear cascade mechanism that, through a rotary gear (manually or motor-driven), can amplify or reduce the area defined by the shuttering organs, preferably triangular shaped, while keeping the geometric shape of the same area intact.

Two types of reactors can be derived from the cavitation unit, namely with an orifice plate or in the form of a Venturi tube, as well as virtually infinite configurations of both the orifice plate and, above all, the Venturi tube.

The intensity and cavitational yield, and thus the overall yield of the technical processes, also increase with the depth of the restriction, at least until that depth reaches the level of the diameter of the circumference circumscribed to the restriction itself [1].

Thus, the hydrodynamic cavitation reactor according to the invention also offers the possibility of dynamically adjusting the depth of the restrictions in relation to their transversal dimensions.

The coupling of several individual units can form, in a parallel configuration, a plate with multiple holes, and, in a serial configuration, a Venturi tube or a series of Venturi tubes.

In the case of a hydrodynamic cavitation reactor in the form of a Venturi tube, the intensity and cavitational yield, and thus the overall yield of the technical processes, also depend significantly on the convergence and divergence angles of the Venturi tube [1].

The hydrodynamic cavitation reactor, in the form of a Venturi tube, according to the invention, offers the possibility of dynamically adjusting the convergence and divergence angles, optionally by means of a control and command system that cooperates with the actuator means of each unit to define the convergence and/or divergence profiles.

In the reactor according to the invention, the shuttering organs of the cavitation unit, defining the restriction of a venturi tube or the hole(s) of an orifice plate, preferably, can be provided with a respective sealing gasket, applied to their surface to realise a liquid seal and to avoid the formation of a "step". Such a seal can be made of plastic material, so that chemical and foodstuff materials can be processed. The plastics that can be used include, for example: PFTE, EPDM, FKM, NBR, VMQ, HNBR, etc.

Brief description of the drawings

Further features and advantages of the invention will be clear from the following detailed description, provided by way of a non-limiting example, concerning the herein enclosed drawings, in which:

- Figure 1 is an overall view of a single-unit reactor (SUVV), side and perspective.
- Figure 2 is a top view of the SUVV unit in Figure 1.
- Figure 3 is a view of the inside of a gear assembly embodiment in the drive gearbox: from above, open (A); from above, closed (B); from below, open (C); from below, closed (D).
- Figure 4 is a top view of the inside of the drive gear.

- Figures 5 and 6 are sectional views of the SUVV unit according to the A-A and B-B lines of Figure 4, respectively.
- Figure 7 is a top view illustrating the closing movement of the gear assembly within the drive gear.
- Figure 8 is a view from below showing the closing movement within the drive gear.
- Figure 9 depicts in sequence the rotary movement of the gear assembly within the drive gear, seen from above and in 3D, in the transformation from the fully open to the fully closed configuration.
- Figure 10 is a 3D top view of the fully open configuration and illustrates also the contact of the rack with the end stop.
- Figures 11 and 12 are 3D top views of a semi-open and a fully closed configuration, respectively.
- Figure 13 shows a 3D perspective side view of the SUVV unit and the cutaway along the C-C section.
- Figure 14 is a 3-D perspective side view of the SUVV unit, with cutaway along the D-D section as seen from above (A) and from below (B).
- Figure 15 is a sectional view according to the line A-A of Figure 4, of the SUVV unit with the inclusion of a PP injection device for liquids and gases.
- Figure 16 illustrates the configuration of several SUVV units in parallel, forming an orifice plate with multiple holes with a triangular and dynamic cross-section, driven simultaneously.
- Figure 17 is a 2D schematic side view of an implementation form of the invention relating to a multiple-unit variable Venturi tube (hereinafter MUVV).
- Figure 18 illustrates a possible embodiment of a MUVV reactor, which can be achieved by the independent activation of the baffles (a cascade of sections); (A) shows an all-open configuration with the racks in contact with their respective end stops; (B) shows a closing configuration which produces the narrowing of the section of the Venturi tube.
- Figure 19 illustrates a construction variant of the sliding coupling of two racks of the same element (SUVV unit) and cutaway along the E-E section.
- Figure 20 is an implementation variant of the rack coupling of several consecutive elements in a MUVV reactor, placed on different planes.
- Figure 21 is a top view showing the position of the grooves which are visible in Figure 18.
- Figure 22 illustrates a detail of the stacked rack coupling.
- Figure 23 is a side-section view of a MUVV reactor with the sections all closed.
- Figure 24 is a side-section view schematic representation of a MUVV with sections having different degrees of opening.
- Figure 25 is a side-section view of a construction variant of two Venturi tubes in series, using a single MUVV.
- Figure 26 shows a construction variant of the MUVV unit, in side view and for any configuration of the MUVV unit (including those shown in Figure 24), with the insertion of a PP injection device for liquids and gases.

- Figure 27 shows frontal views of a vortex breaker device (hereafter BVBA) according to three wing arrangements: isolated (left), inserted overlapping (centre) and open (right).
- Figure 28 shows frontal views of a BVBA vortex breaker device according to two inserted wing arrangements: overlapping and open.
- Figure 29 is a side section of the BVBA with overlapping wings and the indication of the total system discharge.
- Figure 30 is an exploded view of all the components shown in Figure 28 and Figure 29.
- Figure 31 shows a schematic frontal view of the insertion of the BVBA into a tank: with the wings closed during insertion (A), and in an operational configuration with the wings open once the BVBA itself is inserted (B).
- Figure 32 illustrates in schematic view a possible embodiment of the invention using a closed hydraulic circuit, also pressurised, comprising a pump.

## A detailed description of the invention

The detailed description below refers to the example of implementation in which the cavitation unit defines a triangular-shaped restriction; as written above, this configuration is not binding. Cavitation units with a flow restriction with a shape other than triangular, for example with polygonal shapes, such as hexagonal or pentagonal, can be realised by analogy with the construction techniques of a camera diaphragm shutter.

## Single-unit reactor (SUVV)

In one embodiment, the reactor according to the invention is a single-unit reactor (SUVV). The SUVV allows to dynamically change only the restriction section of a Venturi tube or of a hole in an orifice plate, and can have any depth (thickness). Such a unit allows for a wide variety of cavitation regimes, but it is limited, in the case of a Venturi tube, by the fixity of the convergence and divergence sections and by possible excessive pressure drops caused by upstream and downstream "jumps" (sudden changes in cross-sectional area). A possible direct application of the SUVV may consist in the reduction of the Venturi tube to a tube of constant cross-sectional area, provided with a single restriction of predetermined thickness, thus configuring itself as an "orifice plate", which according to known art is capable of producing cavitation phenomena sometimes even more intense than a Venturi tube and consequently more useful in certain specific applications, by way of example and not limitation in the degradation of persistent pollutants.

Additionally, an SUVV can be reproduced in a "parallel" configuration, constituting a plate with several holes preferably of triangular cross-section, which, according to known art, can produce even very efficient cavitation phenomena. The possibility of dynamically varying the cross-sectional area of the holes makes it possible to support a wide variety of cavitation regimes.

Finally, an SUVV can be reproduced in a "series" configuration by forming a Venturi tube equipped with dynamically adjustable convergence and divergence and throttling sections during the process.

The fundamental components of the SUVV are grouped and listed below:

I) Drive gear: cM
II) Demultiplier gear set equipped with a certain number of gear wheels tn, tn' and tn", only as an example 6 gear wheels: (t1; t2; t3; t4; t5; t6); (t1'; t2'; t3'; t4'; t5'; t6'); (t1'; t2'; t3'; t4'; t5'; t6').
III) Stabilising driven wheels: (sT); (sT'); (sT').
IV) Rack-and-pinion shutters defining a triangular restriction with gasket made in nitrile rubber (HBNR) or other materials: (cR); (cR'); (cR').
V) Limit switches: (fC); (fC'); (fC').
VI) Variable triangular cross-section hole: vTh.

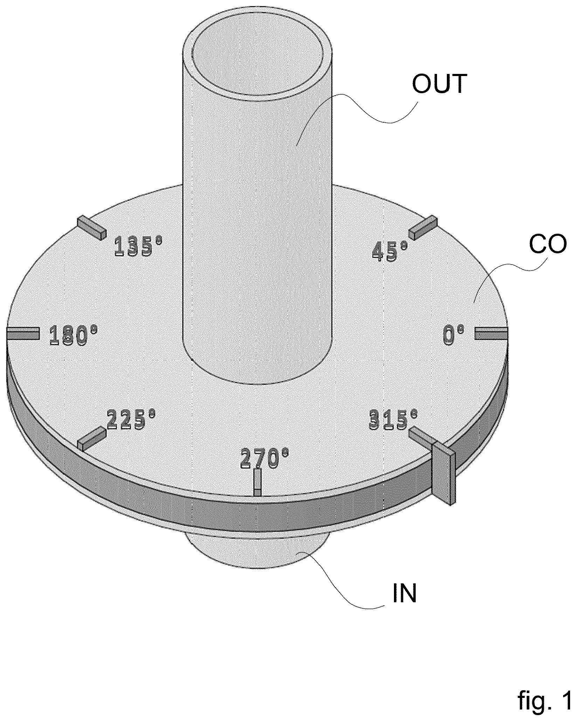

Figure 1 is an overview of the SUVV unit, side, and perspective view. The SUVV unit includes a CO body defining a flow path with an inlet IN and an outlet OUT for the fluid undergoing cavitation.

The actuating means include a cM drive gear with internal toothing and a gear group that cooperates with the drive wheel and the rack-and-pinion shutters.

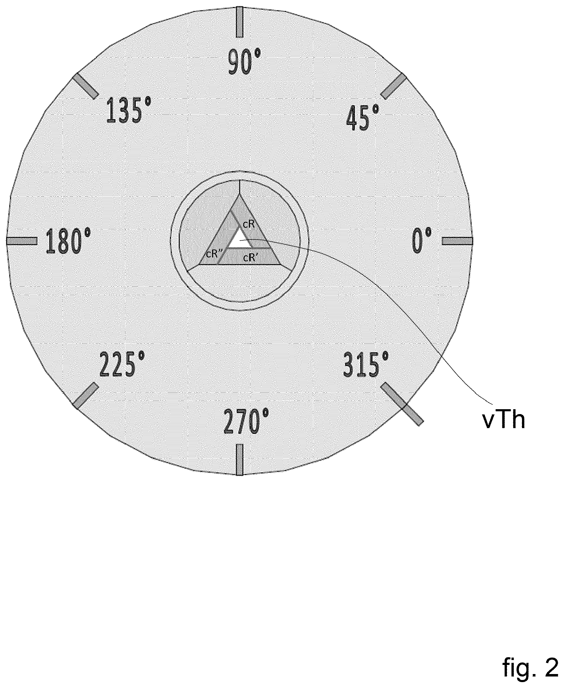

Figure 2 shows a top view of the SUVV unit, with evidence of the mechanism formed by the triangular rack-and-pinion obturating organs defining the restriction, preferably fitted with gaskets: (cR); (cR'); (cR").

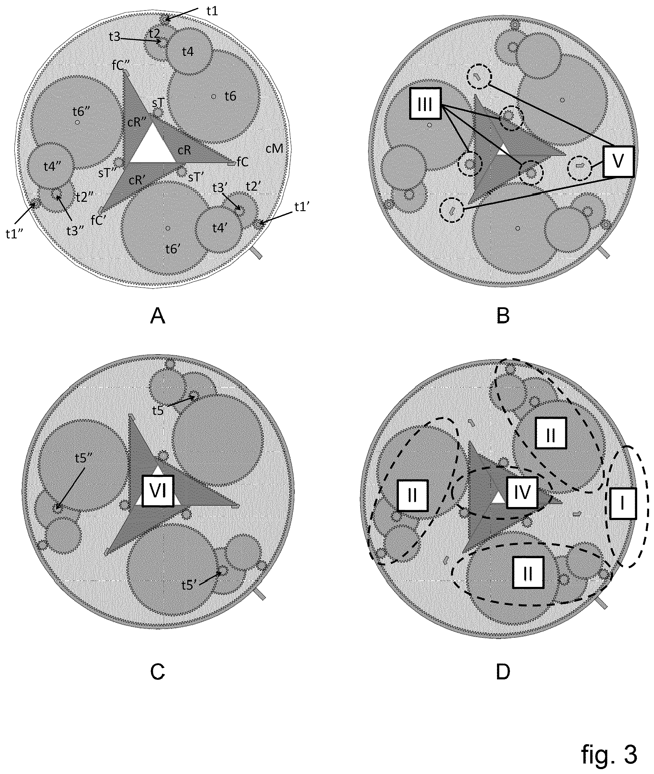

Figure 3 shows the top and bottom views of the gear assembly inside the drive gear (cM), in open and closed configurations, with all components highlighted.

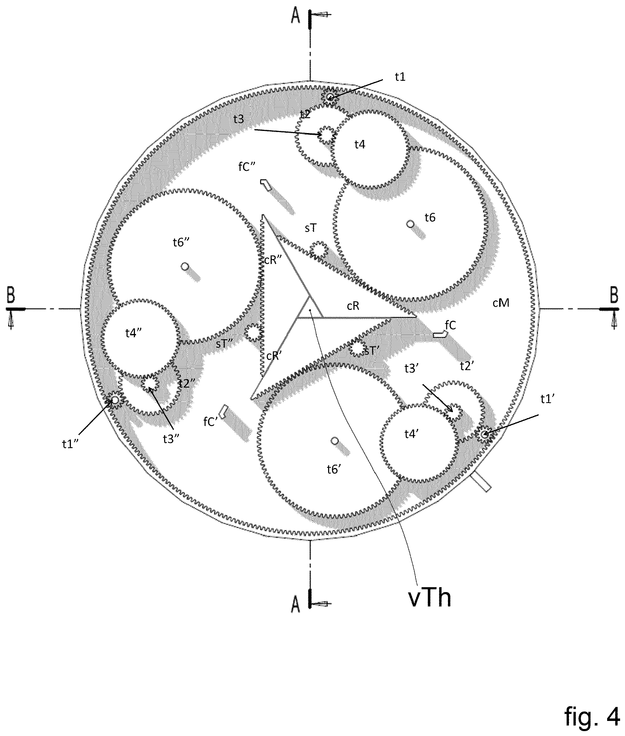

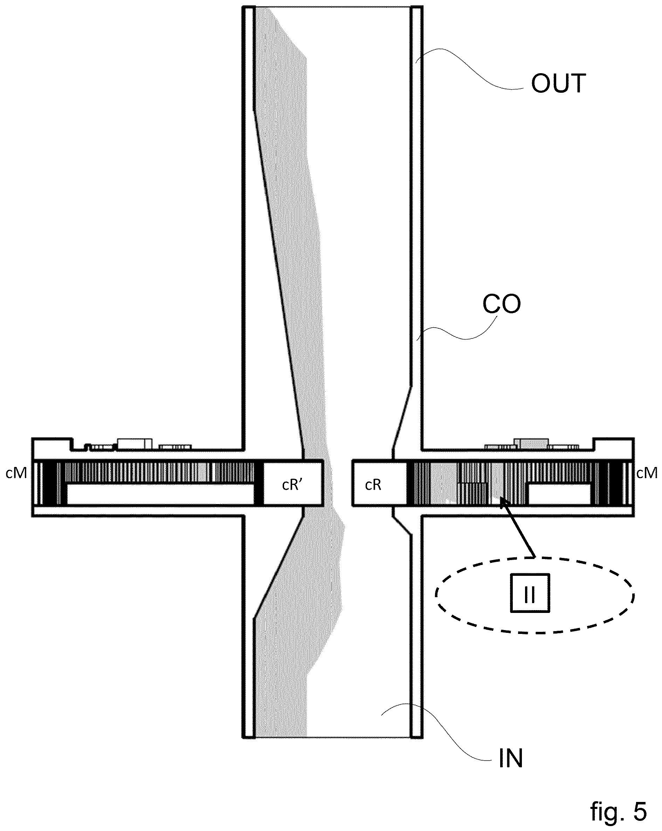

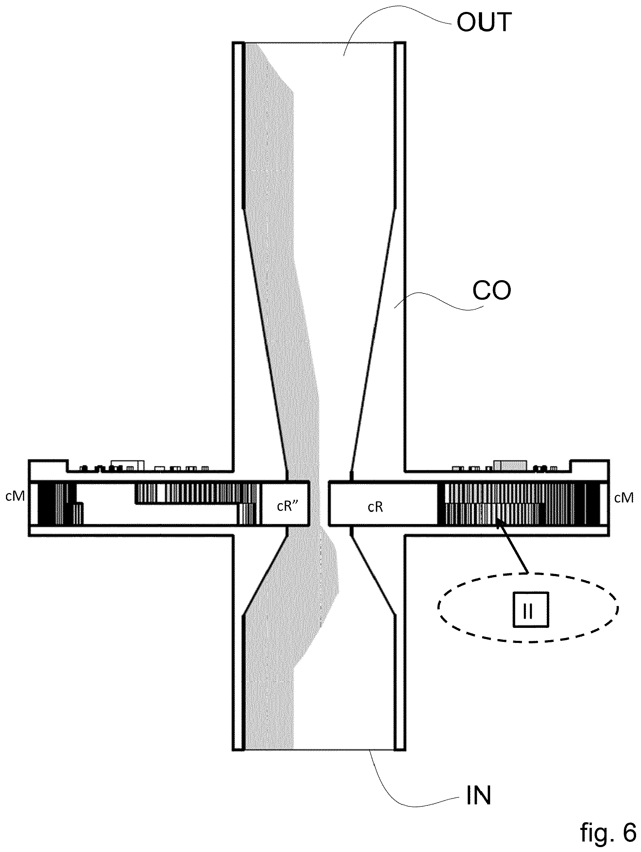

Figure 4 shows the top view of the inside of the motor gear (cM), showing all components and sections A-A and B-B, illustrated in Figure 5 and Figure 6, respectively.

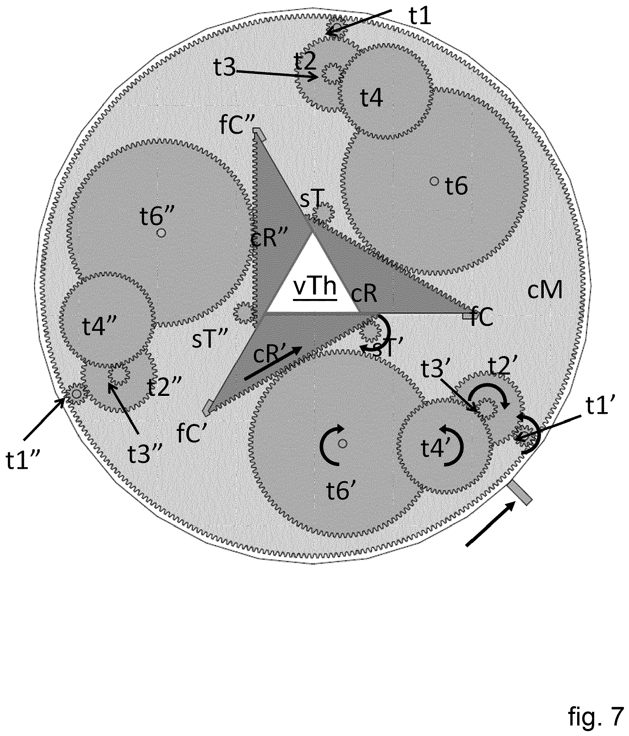

Figure 7 depicts the closing movement within the drive gear (cM), seen from above.

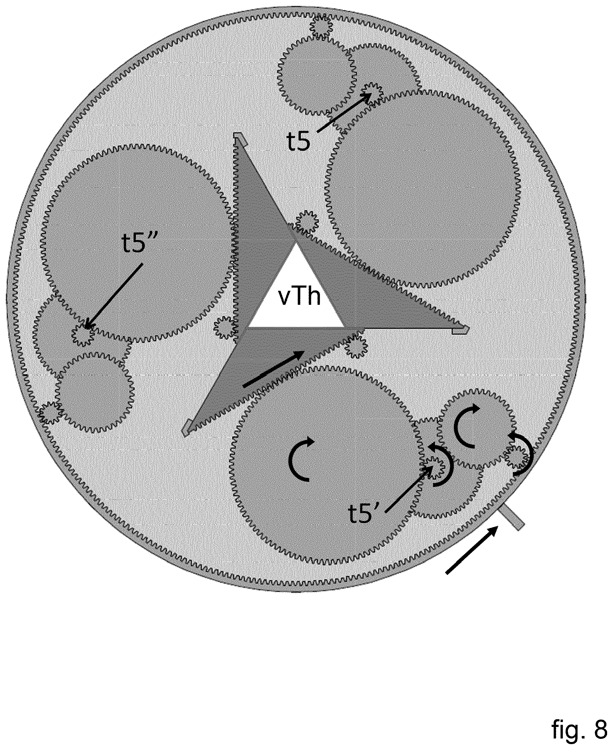

Figure 8 depicts the closing movement within the drive gear (cM), seen from below.

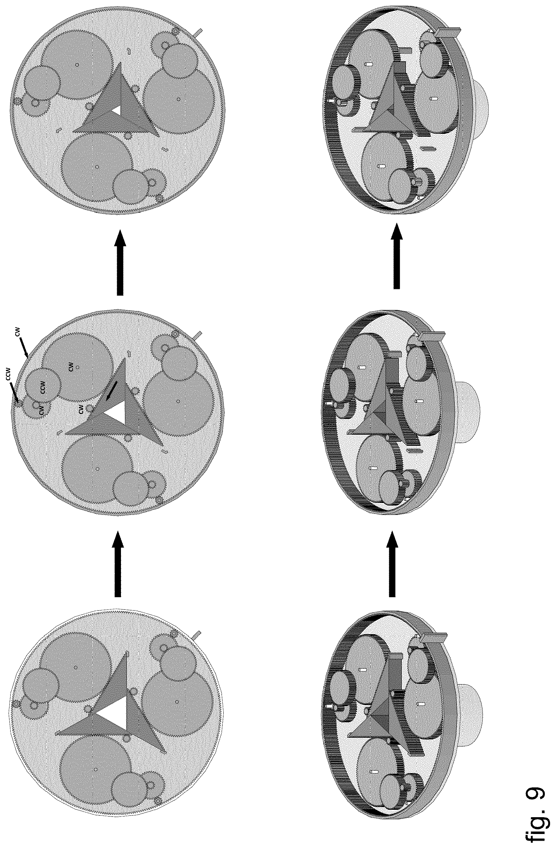

Figure 9 illustrates the rotary gear cascade mechanism, from the all-open to the all-closed configuration, seen from above and in 3D.

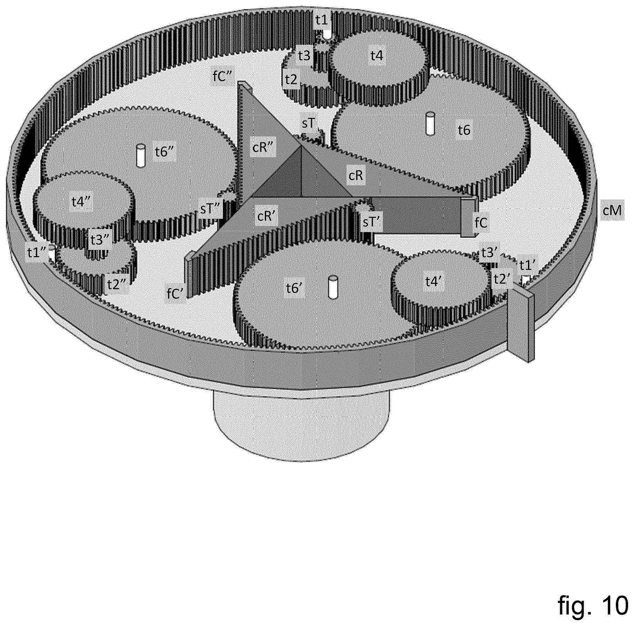

Figure 10 is the top 3D view of the all-open configuration: the rack makes contact with the limit switch (fc).

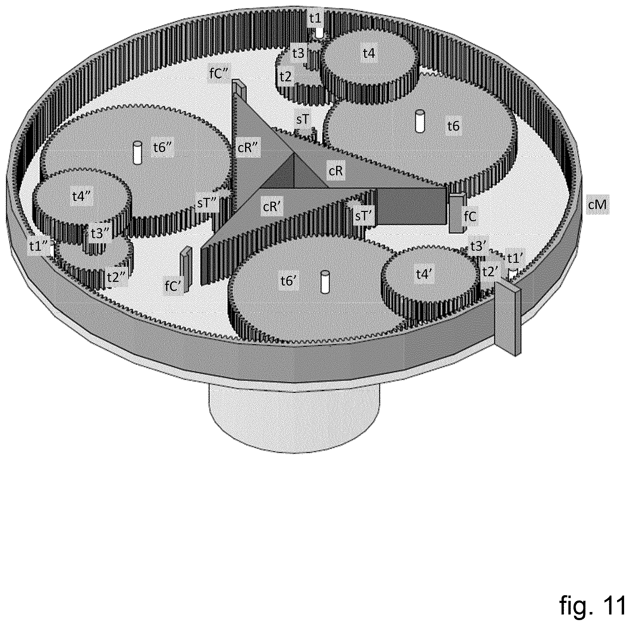

Figure 11 is a 3D top view of the semi-open configuration. The drive gear rotates and transmits the movement to the cascade gear assembly, and the rack slides on t6 and sT. The toothed rack and pinion gears, cR, cR' and cR", slide simultaneously on the respective t6, t6', and t6" and the respective stabiliser wheels sT, sT', sT".

The stabilising driven wheels (sT, sT' and sT") only have a stabilising quarter function. In particular, the smooth surface (without teeth) of each rack, this surface (vertical edge in Figure 11) being one of the three sides of the triangular section of the restriction, slides on the smooth surfaces of the other two racks, thus obtaining a bidirectional linear movement on the same plane.

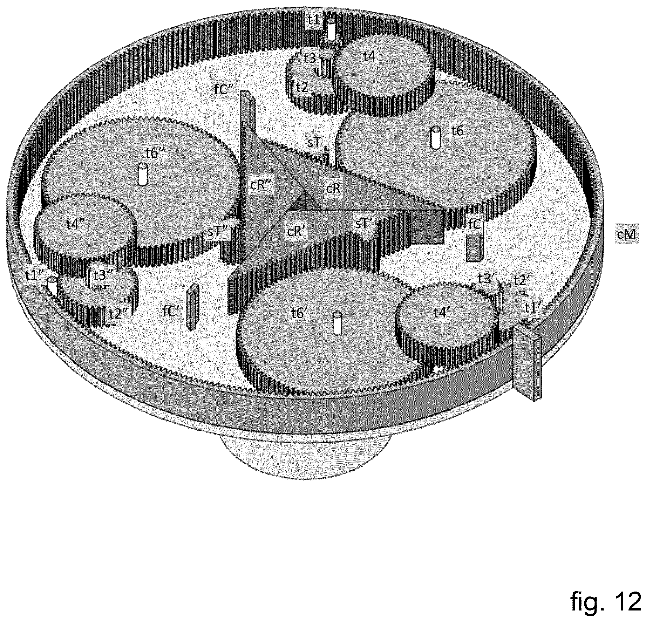

Figure 12 is the 3D top view of the all-closed configuration.

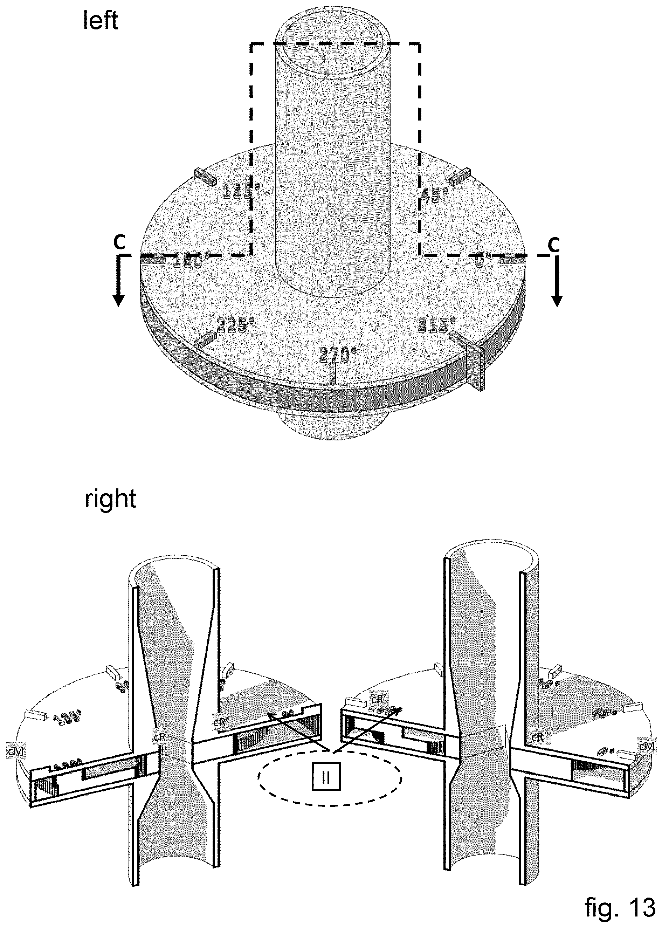

Figure 13 shows the whole SUVV unit in a 3D perspective side view, with evidence of the C-C cross-section in the top and bottom view.

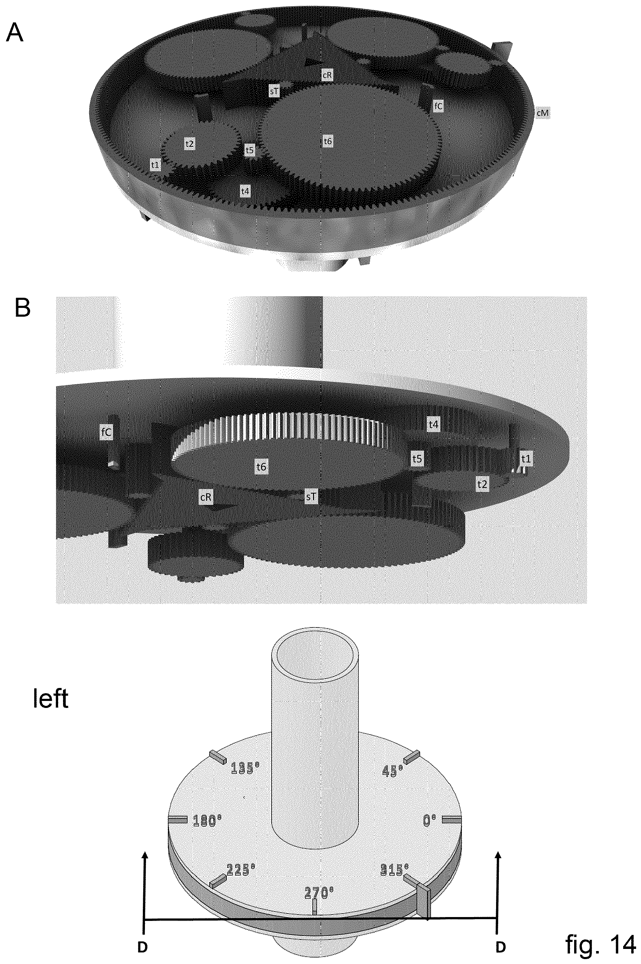

Figure 14 shows the whole SUVV unit in a 3D perspective side view, with a cutaway in the D-D cross-section.

### Single-unit reactor (SUVV) with external liquid and gas injection apparatus

For the purposes of certain applications requiring the controlled oxygenation of the circulating liquid or mixture, or the development of sufficient oxidising activity, also by means of the addition with specific oxidising agents in liquid or gaseous form, such as hydrogen peroxide, oxygen, ozone or Fenton reagents, or the controlled introduction of specific gases or liquids, such as vegetable oils, liquid emulsifiers, liquid enzymes, etc., by way of example and not limited to for the purpose of applications to the remediation or disinfection of water or mixtures of different liquids or different liquids and different solids, fertigation of agricultural crops, including hydroponic ones, the mixing and fortification of beverages, the creation of emulsions also aimed at the production of food supplements and drugs, the hydrolysis of starchy matrices, it is useful to have an apparatus connected to the SUVV reactor just upstream of the beginning of the convergence section in the case of a reactor in the form of a Venturi tube, or immediately upstream of the restriction in the case of an orifice plate, capable of pumping both liquids and gases into the circulating liquid or mixture, possibly including dissolved solids, such that the aforementioned materials can be subjected to cavitation processes in the shortest possible time since their injection, also in order to prevent any degradation reactions. By way of example and not limited to, a peristaltic pump suitable for pumping liquids, gases, and two-phase fluids (liquids and gases together) may be used. By way of example and not limited to, liquids may include hydrogen peroxide, Fenton reagents, vegetable oils and essential oils, emulsifying substances, liquid enzymes; among the gases, ozone, oxygen, and air; among two-phase fluids, solutions including proteins, other nutrients and nutraceutical, cosmeceutical and pharmacologically active ingredients.

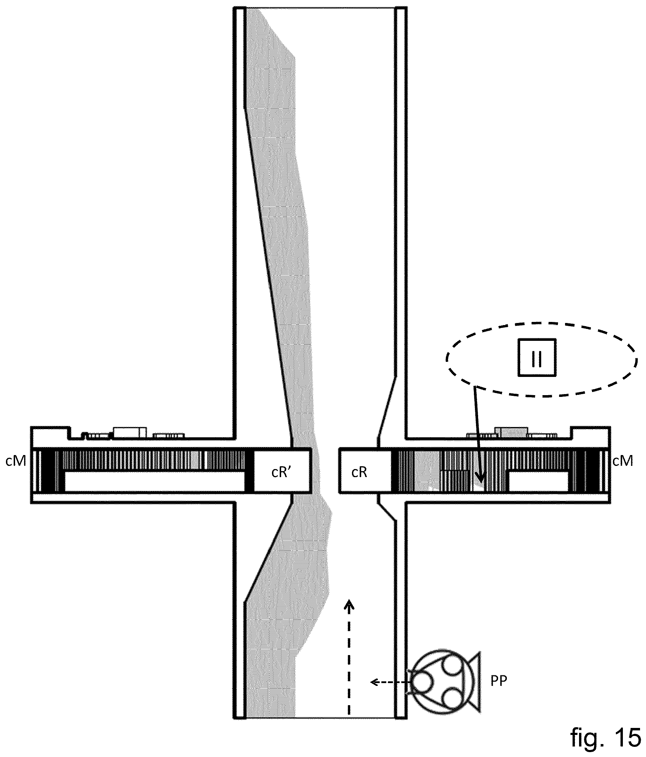

Figure 15 shows the same A-A section as Figure 5, with an injection apparatus, e.g., in the form of a peristaltic pump (PP), placed just upstream of the convergence section (Venturi tube) or the restriction (orifice plate). The direction of the main flow (vertical arrow) and the injected flow (horizontal arrow) are indicated.

### Orifice plate dynamic reactor using several SUVVs in parallel

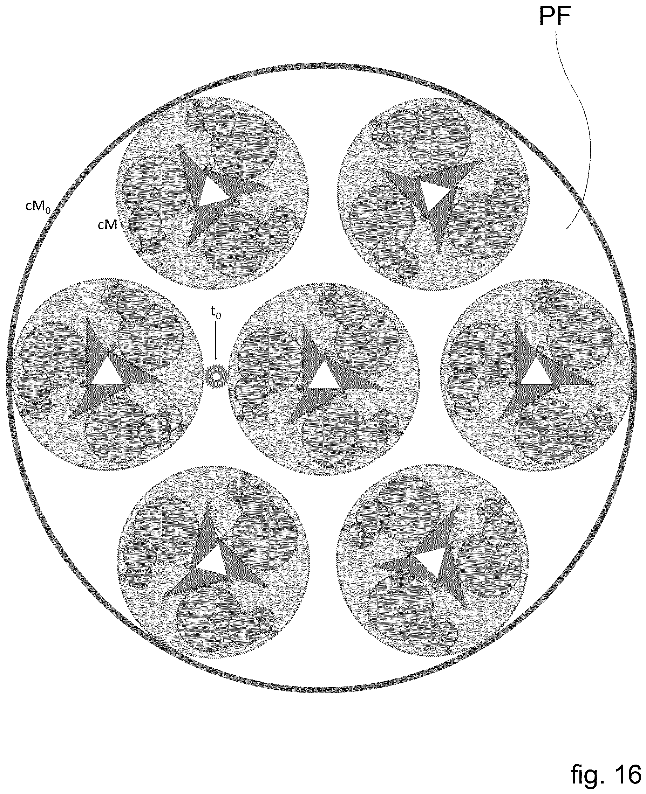

By inserting an arbitrary number of SUVV units in parallel, limited to their driving gears and components inside them, within an external (toothed) driving gear as shown in Figure 16 for the illustrative but not limiting case of 7 SUVV units, one obtains a PF orifice plate with several holes, preferably with triangular cross-section, and a corresponding surface area that is dynamically and simultaneously adjustable, so that each hole preferably has the same surface area at any given time. This configuration of the SUVVs in parallel allows to obtain even very intense cavitation regimes, which are useful for certain applications, especially in the case of low concentration and/or small size of solid particles, or liquids that are not particularly viscous.

Omitting the sign of the components already known from the other figures, except, by way of example, the drive gear "cM" of a SUVV unit, the external drive gear $cM_0$ and the toothed wheel $t_0$ connecting a SUVV unit driven by $cM_0$ and an internal SUVV unit not connected to $cM_0$, are indicated. In the case of multiple internal SUVV units, there will be multiple sprockets $t_0$ each aimed at driving an internal SUVV unit with an SUVV unit connected to $cM_0$, ensuring that all SUVV units are driven simultaneously.

In this configuration, each SUVV unit can be equipped with the liquid and gas injection apparatus shown in Figure 15.

### Multiple unit variable Venturi tube (MUVV)

The MUVV is made up of a sequence of multi-units, each one representing a SUVV, placed in series and coupled with tight fasteners such as screws, bolts, or special glues, the areas of which can change independently of each other, to pursue the goal of, for example, obtaining a constant cavitation number, and relative regime, as the fluid temperature rises, and to continue until a supercavitation regime is obtained, without incurring machine and process stops.

More generally, the MUVV allows achieving virtually any cavitation regime, allowing even the convergence and divergence sections and their angles to be dynamically varied, as well as the depth (thickness) of the restriction, thus providing maximum flexibility of use, and pursuing the complete optimisation of processes that can be performed by means of a fixed cavitation reactor in the form of a triangular-section Venturi tube.

It is also possible to obtain two or more variable Venturi tubes in series.

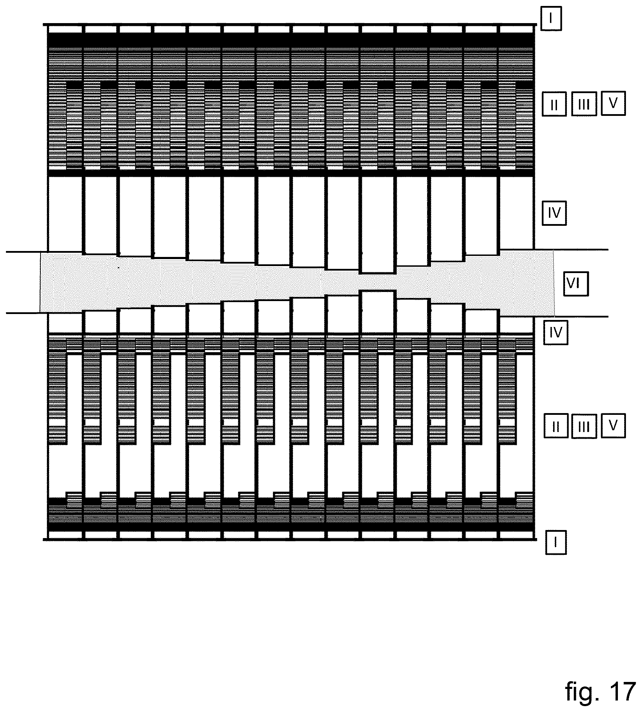

Figure 17 shows the lateral 2D scheme of the MUVV, with which any Venturi tube geometry can be obtained.

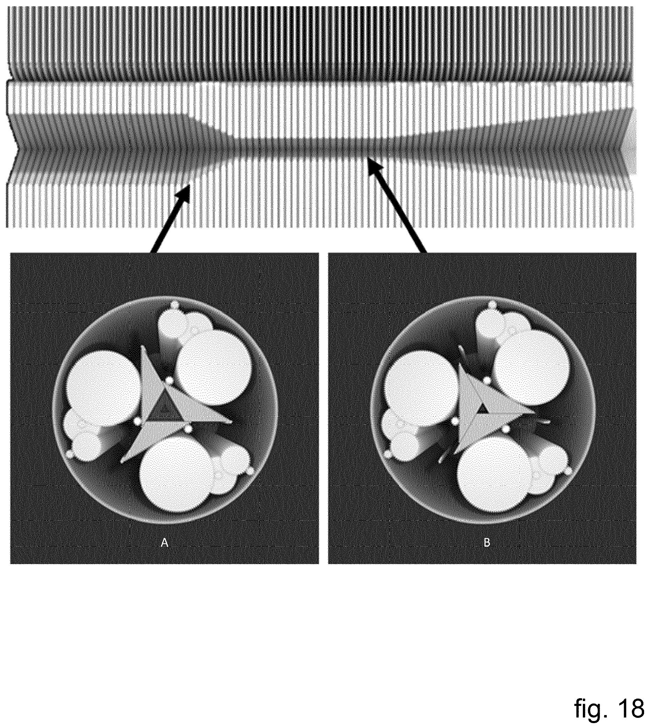

Figure 18 shows the cascade of sections in one of the possible forms (which are virtually infinite), in which a MUVV Venturi tube can be configured, through the independent operation of the septa, each of these septa representing a SUVV.

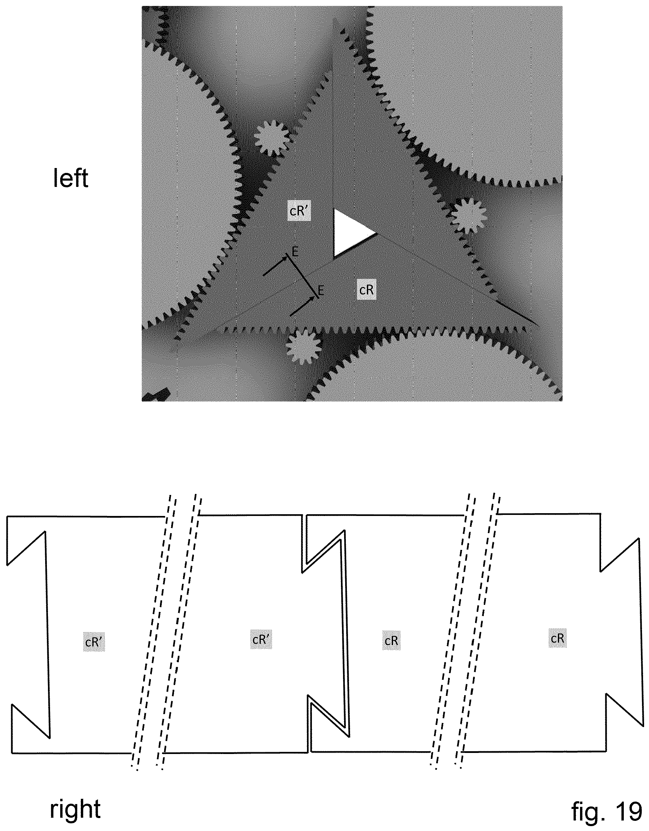

Figure 19 shows a construction variant of the sliding coupling of two racks of the same element (SUVV unit), with a cutaway along the E-E section, seen from above. The abovesaid coupling can be realised in any form, for example in the form of an "omega" (like lathe slides).

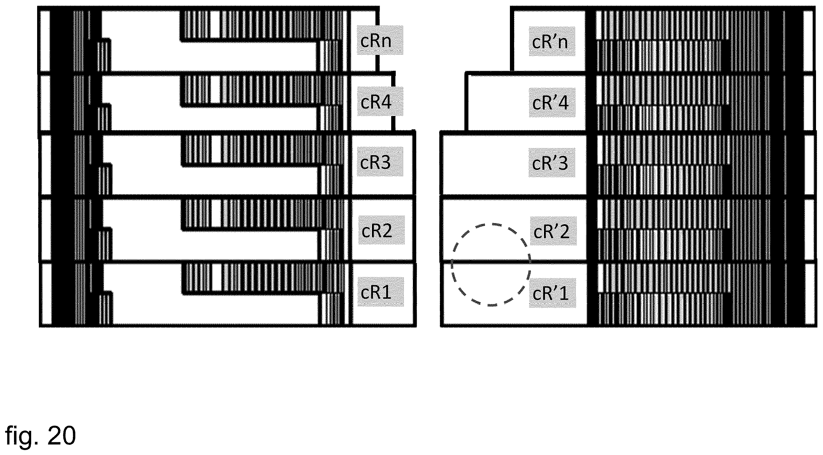

Figure 20 shows a construction variant of the sliding rack coupling of several consecutive elements of the MUVV, placed on different planes.

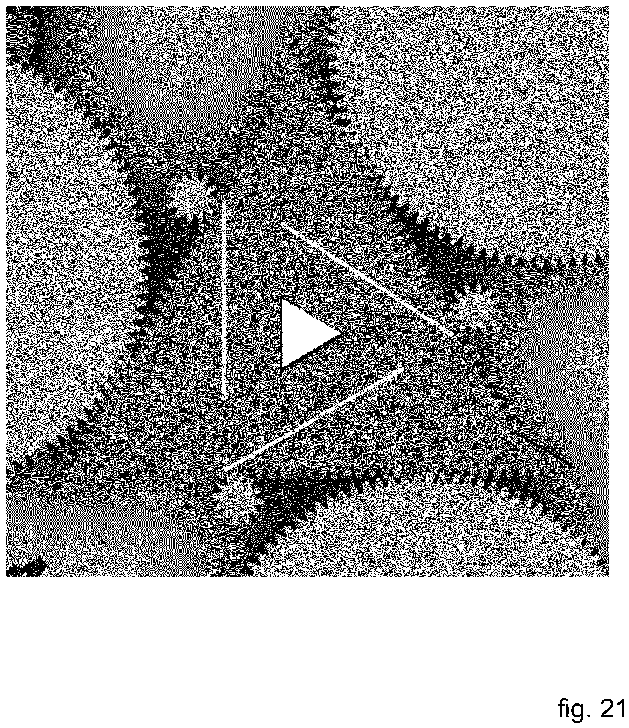

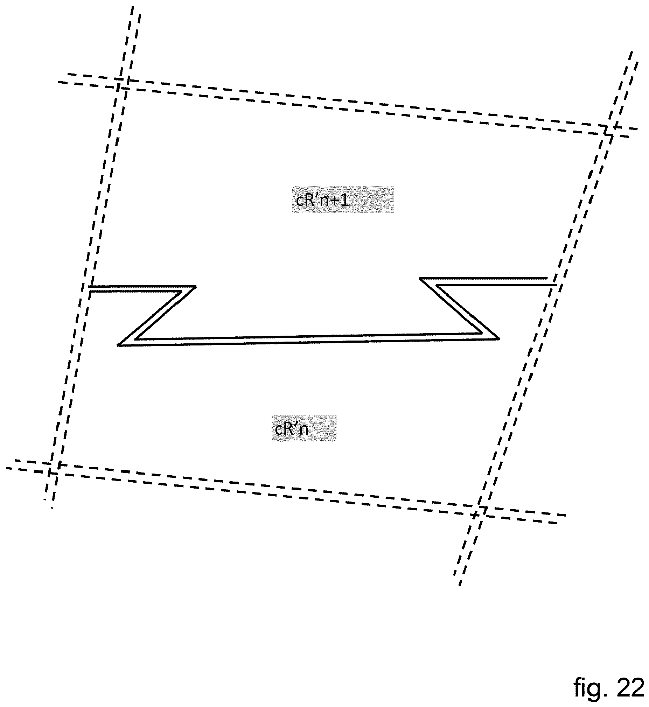

Figure 21 shows the grooves which are visible in Figure 20, while Figure 22 shows a detail of the stacked rack coupling as shown in Figure 20.

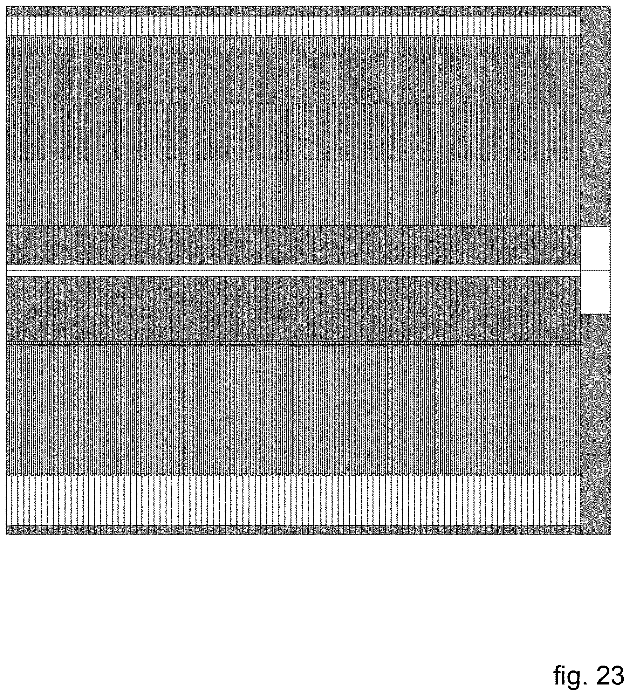

Figure 23 shows in a side view a MUVV with all closed sections.

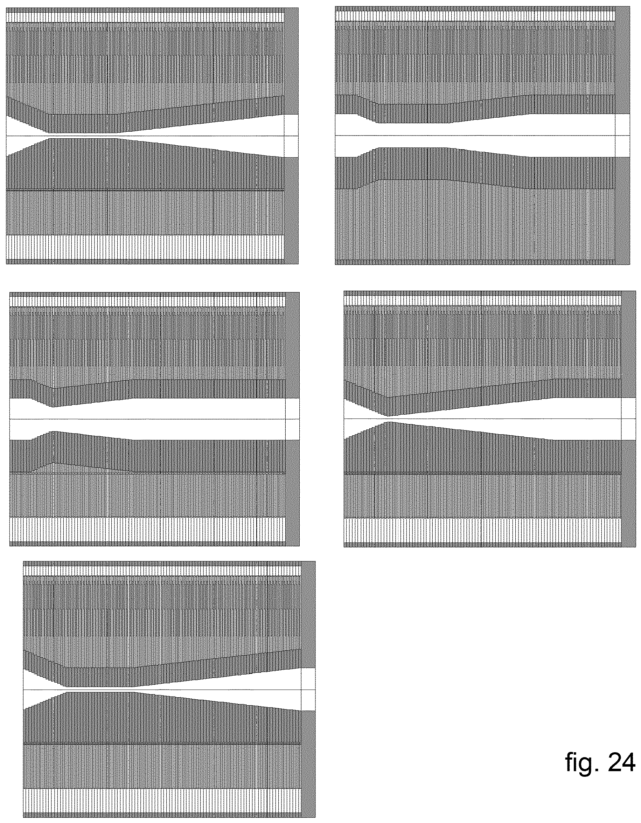

Figure 24 shows in a side view a MUVV in different configurations, in particular with sections at different degrees of opening.

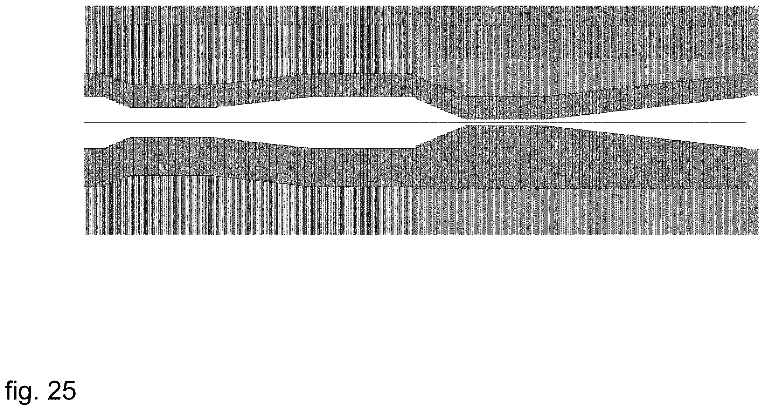

A MUVV can be configured as a succession of Venturi tubes arranged in series, managing the openings of the different sections (SUVV units), thus allowing the realisation of different cavitation processes in cascade. Figure 25 shows one of such possible realisations, as an example but not limited to with two Venturi tubes in series.

Multi-unit (MUVV) variable Venturi tube with external liquid and gas injection apparatus

For the purposes of certain applications requiring the controlled oxygenation of the circulating liquid or mixture, or the development of sufficient oxidising activity, also by means of the addition with specific oxidising agents in liquid or gaseous form, such as hydrogen peroxide, oxygen, ozone or Fenton reagents, or the controlled introduction of specific gases or liquids, such as vegetable oils, liquid emulsifiers, liquid enzymes, etc., by way of example and not limited to for the purpose of applications to the remediation or disinfection of water or mixtures of different liquids or different liquids and different solids, fertigation of agricultural crops, including hydroponic ones, the mixing and fortification of beverages, the creation of emulsions also aimed at the production of food supplements and drugs, the hydrolysis of starchy matrices, it is useful to have an apparatus, connected to the MUVV reactor just upstream of the start of the convergence section, capable of pumping both liquids and gases into the circulating liquid or mixture, possibly including dissolved solids, such that the aforementioned materials can be subjected to cavitation processes in the shortest possible time since their injection, also in order to prevent any degradation reactions. By way of example and not limited to, a peristaltic pump suitable for pumping liquids, gases, and two-phase fluids (liquids and gases together) may be used. By way of example and not limited to, liquids may include hydrogen peroxide, Fenton reagents, vegetable oils and essential oils, emulsifying substances, liquid enzymes; among the gases, ozone, oxygen, and air; among two-phase fluids, solutions including proteins, other nutrients and nutraceutical, cosmeceutical and pharmacologically active ingredients.

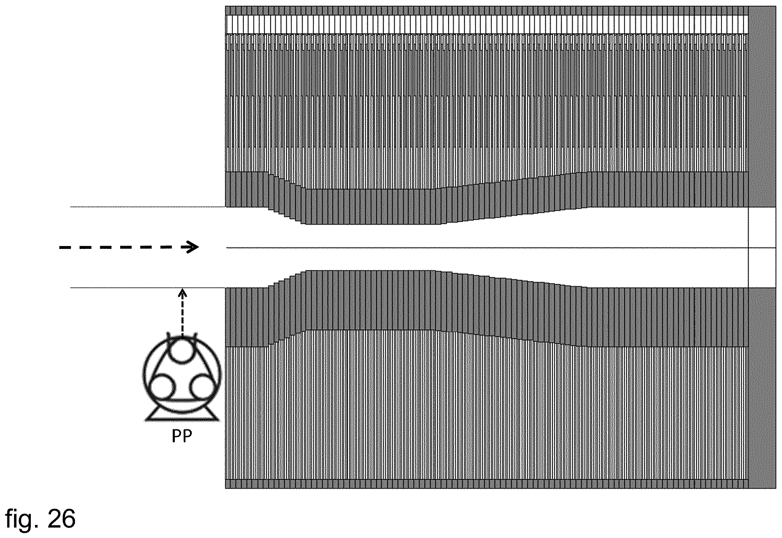

Figure 26 shows one of the configurations of the MUVV unit represented in Figure 24, with an injection apparatus, e.g., in the form of a peristaltic pump (PP), found just upstream of the convergence section. The direction of the main flow (horizontal arrow) and the injected flow (vertical arrow) are also shown.

A vortex breaker in a circuit equipped with a tank

In any configuration, whether SUVV (single or in parallel) or MUVV, where the new hydrodynamic cavitation reactor is inserted in an open or closed hydraulic circuit and this circuit includes at least one reservoir (tank), generally but not limited to cylindrical or cylinder-conical in shape, it must be avoided that the circulation in the tank takes the form of a vortex of such depth as to cause the suction of ambient air into the circuit itself, which would compromise the efficiency of the centrifugal pump (one or more than one) and the efficiency of the cavitation processes supported by the SUVV or MUVV reactor.

A solution is therefore proposed that involves the insertion of a stationary "butterfly-shaped" vortex-breaking apparatus (BVBA - Butterfly Vortex Breaking Apparatus) into the tank. This apparatus does not require external welding, thus with elements of the tank, and can therefore be inserted, removed, and moved as needed. The purpose of the BVBA is to break the vortex created by the circulation in a tank, thus preventing the intake of ambient air into the circuit.

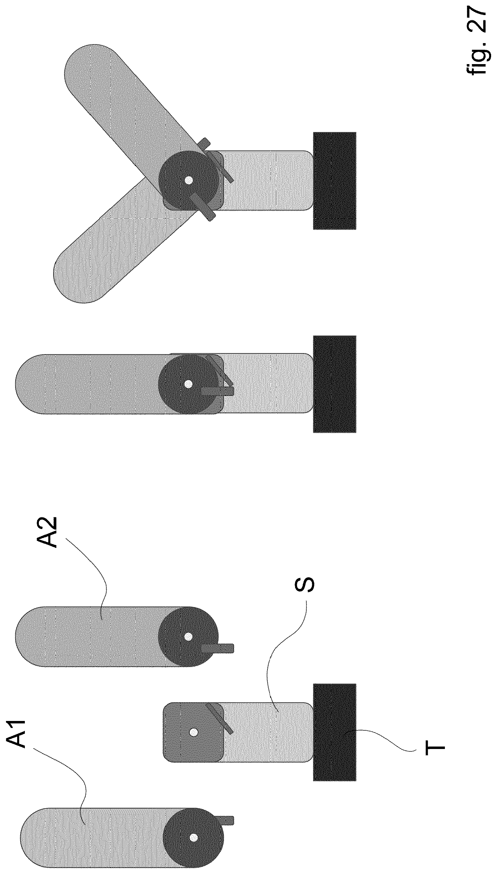

Figure 27 shows the BVBA in the frontal section according to three wing arrangements: isolated, inserted and overlapping, and open.

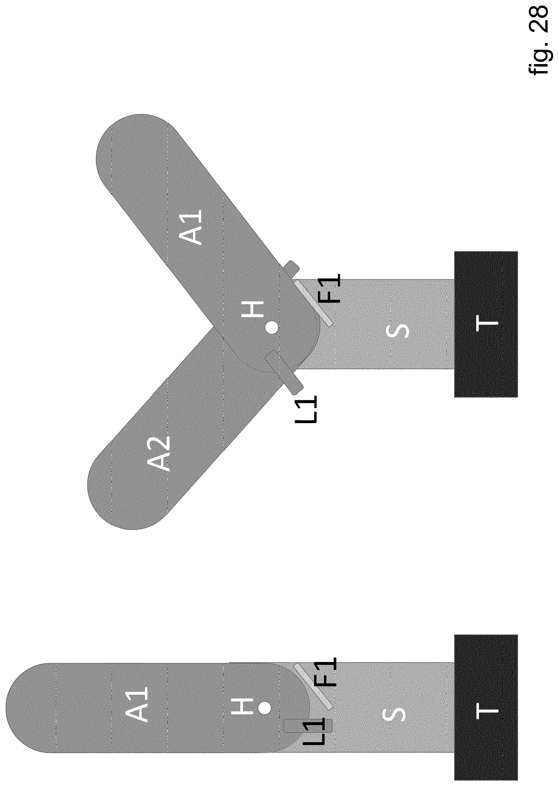

Figure 28 illustrates the configurations reproduced in Figure 27 in the middle and on the right, showing the components. In particular:

F1 is the A1 wing retainer, and is either welded to the S-rod or machined from the "solid" S-rod; the element L1 is welded to A1, or can be moulded into A1, and is used for insertion (L1 encounters F1, this causes blocking on insertion and allows the wings A1 and A2 not to go in the same direction, thus forming the V (butterfly) configuration.

Similar F2 and L2 elements are referred to and functional to the A2 wing.

H is the through-hole for inserting a pin; Plug T and stem S are welded together.

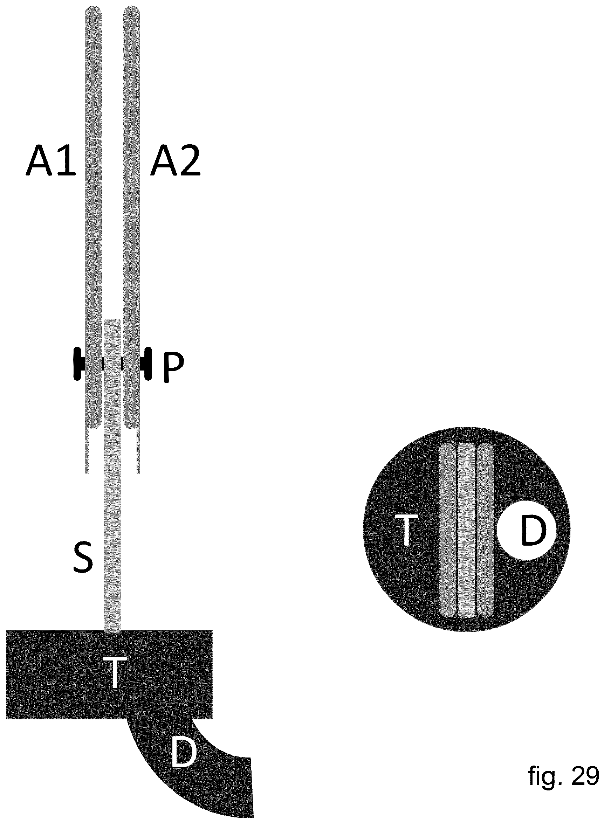

Figure 29 shows the side section and the horizontal section from above of the BVBA with overlapping wings and indication of the total drain D of the system, welded onto the plug T. The side section shows the pin P inserted in the through-hole H of Figure 28.

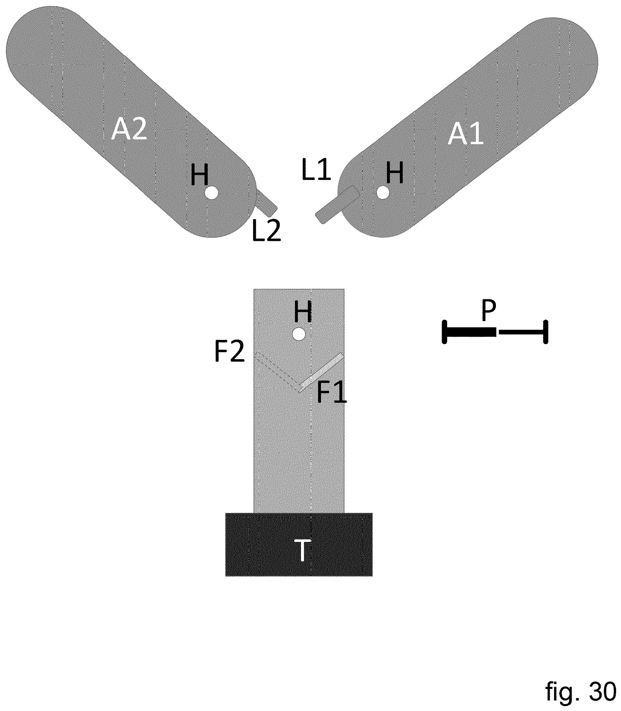

Figure 30 shows all the components shown in Figures 28 and 29, isolated and welded together where necessary.

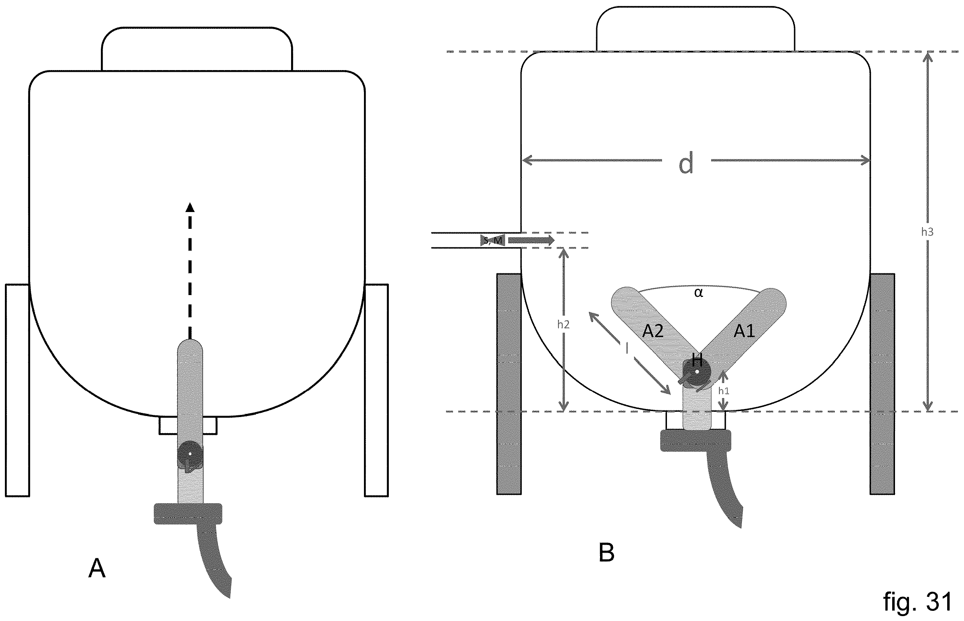

Figure 31 shows how the BVBA is inserted into a tank and its operational configuration once installed. If wings A1 and A2 do not open directly following insertion, the swirling circulation that will develop in the tank once the centrifugal pump (one or more than one) is activated will be sufficient for the aforementioned butterfly opening, still being in the same open configuration until the fluid circulation is activated. Upon removal of the BVBA apparatus from the tank, the wings will automatically close.

Figure 31(B) shows the hydrodynamic cavitation reactor SUVV (S) or MUVV (M), the arrow next to which highlights the direction of the flow into the tank.

Figure 31(B) also shows the following elements: h1, the height of the through-hole suitable for inserting a pin, such height referred to the base of the tank; 1, the length of each of the two wings A1 and A2; $\alpha$, the angle between the two wings A1 and A2; d, the diameter of the tank; h2, the height of the lower base of the section of the hydraulic circuit entering the tank, downstream of the fluid passage through the SUVV or MUVV; h3, the total height of the tank.

Preferably, the angle $\alpha$ between wings A1 and A2 will be 90°, or in the range between 80° and 100°.

The length 1 of each wing A1 and A2 will be such that each wing does not reach the inner wall of the tank; therefore, expressing the angle $\alpha$ in radians: $l \cdot \cos(\pi/2 - \alpha/2) < d/2$.

Preferably, the length 1 of each wing of the BVBA will also be such that the maximum elevation of each wing is less than the elevation h2; thus, expressing the angle $\alpha$ in radians: $h1 + l \cdot \sin(\pi/2 - \alpha/2) < h2$.

Overall: $1 < \min\{(h2-h1)/\sin(\pi/2-\alpha/2); (d/2)/\cos(\pi/2-\alpha/2)\}$.

Preferably, for the BVBA to be effective, the length 1 of each wing A1 and A2 will be between 1/3 and 2/3 of the previous value: $(1/3) \cdot \min\{(h2-h1)/\sin(\pi/2-\alpha/2); (d/2)/\cos(\pi/2-\alpha/2)\} < 1 < (2/3) \cdot \min\{(h2-h1)/\sin(\pi/2-\alpha/2); (d/2)/\cos(\pi/2-\alpha/2)\}$

## Location and height of the hydrodynamic cavitation reactor in a circuit provided with a tank

In case the new hydrodynamic cavitation reactor, whether SUVV or MUVV, is inserted into an open or closed hydraulic circuit, and this circuit includes at least one tank, generally but not limited to cylindrical or cylinder-conical in shape, the SUVV or MUVV reactor is preferably placed horizontally, to avoid excessive turbulence of the fluid circulating inside the tank.

The end section of the diverging section of the SUVV or MUVV reactor, which receives the outflow from the reactor itself, is preferably placed at a horizontal distance of no more than 10 cm from the outer wall of the tank, to contain the greatest part of the cavitation phenomena to the inside of the tank and thus reduce the noise and vibrations produced by the cavitation phenomena. Further preferably, the aforesaid horizontal distance will be no more than 5 cm.

Preferably, h2, the height of the lower base of the inlet section of the hydraulic circuit entering the tank, which is shown in Figure 31, will be between 1/6 and 1/4 of the total internal height of the tank h3, again shown in Figure 31, for example in order to allow the hydraulic circuit to operate even with fluid volumes substantially lower than the total geometric capacity of the same hydraulic circuit.

## Construction examples of a single-unit plant including SUVV or MUVV reactor

The SUVV or MUVV hydrodynamic cavitation reactor, in any configuration, can be inserted into any type of hydraulic circuit, including open hydraulic circuits in which the fluid passes only once through the reactor.

In cases where it is necessary or convenient for each portion of the fluid to pass through the cavitation reactor several times in the course of the same process, by way of example but not limited to achieving a continuous rise in fluid temperature, or because the desired effects can only be achieved following repeated passes (e.g., 30 in number) through the cavitation reactor, one or more SUVV or MUVV reactors, in any configuration, can be inserted into a closed hydraulic circuit.

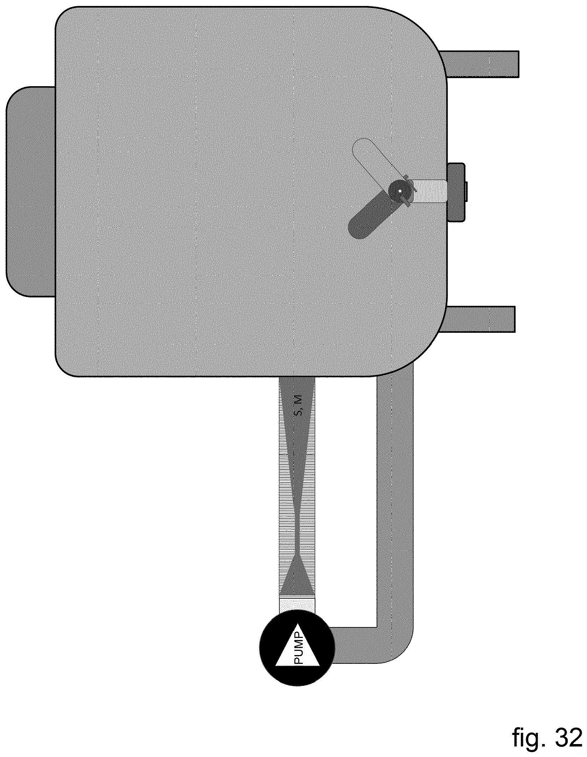

A possible embodiment of the invention is illustrated in Figure 32, using a closed hydraulic circuit, also pressurised, comprising a pump, e.g., a centrifugal pump, a tank, a BVBA apparatus and a SUVV or MUVV cavitation reactor, resulting in the continuous recirculation of the fluid.

## Further considerations

1. In summary, the cavitation reactor which is the object of the invention shows the following advantages:

2. It has no proprietary components.

3. It can be used for all liquid-solid mixtures, also containing gases (one reactor can handle all matrices).

4. The convergent and divergent shapes of the reactor in the form of a Venturi tube (MUVV), with a triangular cross-section, can be dynamically changed during the process, as can the depth of the restriction, dynamically determining different cavitation regimes: the developed cavitation regime, in turn with very different modes and specifically suited to different matrices, and the supercavitation regime, the latter used in particular for antimicrobial purposes, i.e. for the purposes of disinfection and microbiological safety.

5. With several micro-sections (Figure 23), it is possible to obtain two or more static Venturi tubes with triangular areas that perform different tasks during a single liquid-solid mixture pass.

6. The micro-sections can be controlled either manually (ring nuts) or with electric motors.

7. Each micro-section has its own structural part divided into three parts (steel, PVC, ceramic, etc.), and its sealing part (O-rings, metal couplings, clamps, etc.). If the mechanical or sealing part is damaged, it can be quickly changed by simply removing the ring seats, and removing only the affected part.

8. If the MUVV is all open, it forms a hollow solid preferably with a linear triangular cross-section. This makes it possible to estimate the flow rate of the circulating liquid and speed up the set-up times.

9. It consists of a single tube, with obvious advantages in terms of simplicity of construction and economy.

10. The embodiment in the form of an orifice plate enables optimised cavitation processes up to particularly high intensities, with a particularly simple configuration.

11. More generally, through the dynamic regulation and optimisation of hydrodynamic cavitation processes, the invention enables a substantial reduction in the costs of productions based on hydrodynamic cavitation processes, both plant and process costs, and extends the application of the technology to previously difficult-to-treat matrices, for example, lignocellulosic biological matrices, or liquids containing persistent pollutants. The methods and apparatus covered by the invention enable hydrodynamic cavitation processes to be dynamically controlled and regulated, thereby allowing the transition within the same process from one specific hydrodynamic cavitation regime to any other, i.e., allowing a single plant to be optimised for several production processes. This avoids the need to replace the reactor, allows the continuity of the processes, simplifies the plant management, and leads to the optimisation of products obtained for which, in the known art, several plants would be needed, or the replacement of essential plant parts.

12. Additionally, the coupling of one or more pumps, for example, centrifugal pumps, designed to circulate the fluid and pass the fluid itself through a SUVV or MUVV reactor, with an inverter aimed at varying the frequency and therefore the operating regime of the same pumps, can allow a further expansion of the range of cavitation regimes obtainable; furthermore, by sufficiently decreasing the frequency of the inverter, it is possible to obtain circulation regimes in the absence of cavitation phenomena, for example, in order to maintain a constant temperature of the circulating fluid and thus realise isothermal process phases, to keep the fluid circulation active and avoid the precipitation of solids, or to favour or preserve the homogeneity of the fluid itself.

References

1. Carpenter, J.; Badve, M.; Rajoriya, S.; George, S.; Saharan, V.K.; Pandit, A.B. Hydrodynamic Cavitation: An Emerging Technology for the Intensification of Various Chemical and Physical Processes in a Chemical Process Industry. Rev. Chem. Eng. 2017, 33, 433-468, doi:10.1515/revce-2016-0032.

2. Meneguzzo, F.; Zabini, F.; Albanese, L.; Crisci, A. Novel Affordable, Reliable and Efficient Technologies to Help Addressing the Water-Energy-Food Nexus. Eur. J. Sustain. Dev. 2019, 8, 1-17, doi:10.14207/ejsd.2019.v8n4pl.

3. Meneguzzo, F.; Albanese, L.; Zabini, F. Hydrodynamic Cavitation in Beer and Other Beverage Processing. In Innovative Food Processing Technologies; Knoerzer, K., Muthukumarappan, K., Eds.; Elsevier, 2021; pp. 369-394 ISBN 9780128157817.

4. Meneguzzo, F.; Zabini, F. Agri-Food and Forestry Sectors for Sustainable Development: Innovations to Address the Ecosystems-Resources-Climate-Food-Health Nexus; Springer Nature., 2021; ISBN ISBN: 978-3-030-66284-4.

5. Scurria, A.; Sciortino, M.; Albanese, L.; Nuzzo, D.; Zabini, F.; Meneguzzo, F.; Alduina, R.; Presentato, A.; Pagliaro, M.; Avellone, G.; et al. Flavonoids in Lemon and Grapefruit IntegroPectin. Chemistry Open 2021, 10, 1055-1058, doi: 10.1002/OPEN.202100223.

6. Scurria, A.; Sciortino, M.; Presentato, A.; Lino, C.; Piacenza, E.; Albanese, L.; Zabini, F.; Meneguzzo, F.; Nuzzo, D.; Pagliaro, M.; et al. Volatile Compounds of Lemon and Grapefruit IntegroPectin. Molecules 2021, 26, 51, doi:10.3390/molecules26010051.

7. Nuzzo, D.; Scordino, M.; Scurria, A.; Giardina, C.; Giordano, F.; Meneguzzo, F.; Mudò, G.; Pagliaro, M.; Picone, P.; Attanzio, A.; et al. Protective, Antioxidant and Antiproliferative Activity of Grapefruit Integropectin on Sh-Sy5y Cells. Int. J. Mol. Sci. 2021, 22, 9368, doi:10.3390/ijms22179368.

8. Nuzzo, D.; Picone, P.; Giardina, C.; Scordino, M.; Mudò, G.; Pagliaro, M.; Scurria, A.; Meneguzzo, F.; Ilharco, L.M.; Fidalgo, A.; et al. New Neuroprotective Effect of Lemon Integropectin on Neuronal Cellular Model. Antioxidants 2021, 10, 669, doi:10.3390/antiox10050669.

9. Presentato, A.; Piacenza, E.; Scurria, A.; Albanese, L.; Zabini, F.; Meneguzzo, F.; Nuzzo, D.; Pagliaro, M.; Martino, D.C.; Alduina, R.; et al. A New Water-Soluble Bactericidal Agent for the Treatment of Infections Caused by Gram-Positive and Gram-Negative Bacterial Strains. Antibiotics 2020, 9, 586, doi: 10.3390/antibiotics9090586.

10. Yan, Y.; Thorpe, R.B. Flow Regime Transitions Due to Cavitation in the Flow through an Orifice. Int. J. Multiph. Flow 1990, 16, 1023-1045, doi:10.1016/0301-9322(90)90105-R.

11. Vichare, N.P.; Gogate, P.R.; Pandit, A.B. Optimization of Hydrodynamic Cavitation Using a Model. Chem. Eng. Technol. 2000, 23, 683-690, doi:10.1002/1521-4125(200008)23:8<683::AID-CEAT683>3.0.CO;2-9.

12. Albanese, L.; Meneguzzo, F. Hydrodynamic Cavitation-Assisted Processing of Vegetable Beverages: Review and the Case of Beer-Brewing. In Production and Management of Beverages; Grumezescu, A.M., Holban, A.M., Eds.; Woodhead Publishing, 2019; pp. 211-257 ISBN 978-0-12-815260-7.

**Claims**

1. A reactor for hydrodynamic cavitation processes of a fluid comprising:

   - a body (CO) defining a flow path for the fluid subjected to cavitation and provided with an inlet (IN) and an outlet (OUT) for the fluid and
   - at least one cavitation unit defining a restriction (vTh) of the flow area, interposed in the flow path between inlet and outlet,
   - wherein said at least one cavitation unit is configured in such a way as to define a flow restriction (vTh) with a variable flow area, manually or motor driven actuator means (cM, tn, tn', tn") being provided, configured to change the flow area of the restriction between a configuration of maximum flow area and a plurality of configurations with a flow area reduced with respect to the configuration of maximum flow area,
   - **characterized in that** said at least one cavitation unit comprises a plurality of shutter members (cR, cR', cR"), which can be moved linearly and configured so as to jointly define the boundary of said flow restriction (vTh) and in which said actuator means are arranged to simultaneously cause translation of the shutter members between the maximum opening position of the restriction and a plurality of positions with restricted openings, consequently maintaining the geometric similarity of the geometric shapes defining the flow area, and
   - wherein said shutter members jointly define a restriction having a triangular shape, thereby realizing a geometrical configuration with a high perimeter to area ratio, which intensifies the cavitation processes.

2. The cavitation reactor according to claim 1, comprising a plurality of said cavitation units arranged in parallel and associated with a plate (PF) transversal to the flow path.

3. The cavitation reactor according to claim 2, **characterized in that** said flow restrictions of each unit define flow areas having the same geometric configuration and said actuator means are arranged to simultaneously regulate the flow area of each restriction in such a way that the restrictions have the same flow area at each operational instant.

4. The cavitation reactor according to claim 1, comprising a plurality of said cavitation units arranged in series so as to configure said reactor as a Venturi tube, with a converging flow section, a diverging flow section and a maximum flow restriction, wherein said restrictions of the flow area of said units jointly define the converging section and/or the diverging section and/or the maximum flow restriction of the Venturi tube, or of several Venturi tubes arranged in series.

5. The cavitation reactor according to claim 1 **characterized in that**:

   - said shutter members comprise an external rack wall,
   - said actuator means comprise, for each of said shutter members, a group of reduction gears (tn, tn', tn") which engages the rack wall of the respective shutter member, and
   - a manually or motor driven driving crown (cM), provided with an internal toothing, cooperating with each of said groups of reduction gears and in which the rotation of said driving crown causes the simultaneous translation of the shutter members.

6. The cavitation reactor according to any one of the preceding claims, forming part of a supply circuit for the fluid subjected to cavitation, **characterized in that** it comprises a liquid and / or gas injection device arranged upstream of the flow restriction.

7. A cavitation plant comprising a cavitation reactor according to any one of claims 1 to 6 in a closed or open hydraulic circuit which comprises a tank, fed by the fluid subjected to cavitation, **characterized in that** said tank comprises a vortex-breaking device, inserted in the bottom of the tank and comprising a stem (S) and a pair of movable wings articulated to the stem and capable of assuming a mutual overlapping configuration and an open V-shaped configuration.

8. A cavitation plant comprising a cavitation reactor according to any one of claims 1 to 6 and a hydraulic circuit in which the circulation of the fluid is activated by one or more pumps, each one or collectively connected to one or more inverters adapted to vary the operating mode of the connected pumps.

9. A hydrodynamic cavitation process implemented with the use of a cavitation reactor according to any one of claims 1 to 6 or of a plant according to claims 7 or 8.

fig. 1

fig. 2

EP 4 260 934 A1

A

B

C

D

fig. 3

14

fig. 4

OUT

CO

cM

cR'

cR

cM

II

IN

fig. 5

OUT

CO

cM

cR"

cR

cM

II

IN

fig. 6

fig. 7

fig. 8

fig. 9

fig. 10

fig. 11

fig. 12

left

right

fig. 13

A

B

left

fig. 14

cM

cR'

cR

cM

II

PP

fig. 15

fig. 16

fig. 17

fig. 18

left

cR'

E

E

cR

cR'

cR'

cR

cR

right

fig. 19

fig. 20

fig. 21

cR'n+1

cR'n

fig. 22

fig. 23

fig. 24

fig. 25

fig. 26

PP

fig. 27

fig. 28

A1    A2

P

S

T

D

T    D

fig. 29

fig. 30

fig. 31

fig. 32

Europäisches
Patentamt

European
Patent Office

Office européen
des brevets

# EUROPEAN SEARCH REPORT

Application Number

EP 23 16 7399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 393 417 A (COX DALE W [US]) 28 February 1995 (1995-02-28) * figure 2 * ----- | 1-9 | INV. B01J19/00 B05B1/30 F15D1/00 |
| A | US 2022/016588 A1 (LEDWON ANTON [DE] ET AL) 20 January 2022 (2022-01-20) * paragraph [0019]; figure 3 * ----- | 1-9 | B01J19/26 B01J4/00 |
| A | KR 2011 0017866 A (HYCA TECHNOLOGIES PVT LTD [IN]) 22 February 2011 (2011-02-22) * paragraph [0033] * ----- | 1-9 | |

TECHNICAL FIELDS SEARCHED (IPC)

B01J
B65D
B05B
F15D

The present search report has been drawn up for all claims

| Place of search | Date of completion of the search | Examiner |
|---|---|---|
| Munich | 1 June 2023 | Pasanisi, Andrea |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 7399

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2023

| Patent document cited in search report | | Publication date | Patent family member(s) | | Publication date |
|---|---|---|---|---|---|
| US 5393417 | A | 28-02-1995 | KR | 930019558 A | 18-10-1993 |
| | | | US | 5326468 A | 05-07-1994 |
| | | | US | 5393417 A | 28-02-1995 |
| | | | US | 5494585 A | 27-02-1996 |
| US 2022016588 | A1 | 20-01-2022 | BR | 112021009117 A2 | 10-08-2021 |
| | | | CA | 3118025 A1 | 22-05-2020 |
| | | | DK | 3650115 T3 | 02-11-2020 |
| | | | EP | 3650115 A1 | 13-05-2020 |
| | | | ES | 2828678 T3 | 27-05-2021 |
| | | | HR | P20201715 T1 | 25-12-2020 |
| | | | HU | E051330 T2 | 01-03-2021 |
| | | | LT | 3650115 T | 10-11-2020 |
| | | | PL | 3650115 T3 | 11-01-2021 |
| | | | PT | 3650115 T | 22-10-2020 |
| | | | SI | 3650115 T1 | 31-12-2020 |
| | | | US | 2022016588 A1 | 20-01-2022 |
| | | | WO | 2020098984 A1 | 22-05-2020 |
| KR 20110017866 | A | 22-02-2011 | CN | 102026718 A | 20-04-2011 |
| | | | EP | 2285482 A2 | 23-02-2011 |
| | | | JP | 2011523372 A | 11-08-2011 |
| | | | KR | 20110017866 A | 22-02-2011 |
| | | | US | 2011070639 A1 | 24-03-2011 |
| | | | WO | 2010089759 A2 | 12-08-2010 |
| | | | ZA | 201008928 B | 25-01-2012 |

EPO FORM P0459

For more details about this annex : see Official Journal of the European Patent Office, No. 12/82

# EP 4 260 934 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CARPENTER, J. ; BADVE, M. ; RAJORIYA, S. ; GEORGE, S. ; SAHARAN, V.K. ; PANDIT, A.B.** Hydrodynamic Cavitation: An Emerging Technology for the Intensification of Various Chemical and Physical Processes in a Chemical Process Industry. *Rev. Chem. Eng.,* 2017, vol. 33, 433-468
- **MENEGUZZO, F. ; ZABINI, F. ; ALBANESE, L. ; CRISCI, A.** Novel Affordable, Reliable and Efficient Technologies to Help Addressing the Water-Energy-Food Nexus. *Eur. J. Sustain. Dev.,* 2019, vol. 8, 1-17
- Hydrodynamic Cavitation in Beer and Other Beverage Processing. **MENEGUZZO, F. ; ALBANESE, L. ; ZABINI, F.** Innovative Food Processing Technologies. Elsevier, 2021, 369-394
- **MENEGUZZO, F. ; ZABINI, F.** Agri-Food and Forestry Sectors for Sustainable Development: Innovations to Address the Ecosystems-Resources-Climate-Food-Health Nexus. *Springer Nature,* 2021, ISBN 978-3-030-66284-4
- **SCURRIA, A. ; SCIORTINO, M. ; ALBANESE, L. ; NUZZO, D. ; ZABINI, F. ; MENEGUZZO, F. ; ALDUINA, R. ; PRESENTATO, A. ; PAGLIARO, M. ; AVELLONE, G. et al.** Flavonoids in Lemon and Grapefruit IntegroPectin. *Chemistry Open,* 2021, vol. 10, 1055-1058
- **SCURRIA, A. ; SCIORTINO, M. ; PRESENTATO, A. ; LINO, C. ; PIACENZA, E. ; ALBANESE, L. ; ZABINI, F. ; MENEGUZZO, F. ; NUZZO, D. ; PAGLIARO, M. et al.** Volatile Compounds of Lemon and Grapefruit IntegroPectin. *Molecules,* 2021, vol. 26, 51

- **NUZZO, D. ; SCORDINO, M. ; SCURRIA, A. ; GIARDINA, C. ; GIORDANO, F. ; MENEGUZZO, F. ; MUDÒ, G. ; PAGLIARO, M. ; PICONE, P. ; ATTANZIO, A. et al.** Protective, Antioxidant and Antiproliferative Activity of Grapefruit Integropectin on Sh-Sy5y Cells. *Int. J. Mol. Sci.,* 2021, vol. 22, 9368
- **NUZZO, D. ; PICONE, P. ; GIARDINA, C. ; SCORDINO, M. ; MUDÒ, G. ; PAGLIARO, M. ; SCURRIA, A. ; MENEGUZZO, F. ; ILHARCO, L.M. ; FIDALGO, A. et al.** New Neuroprotective Effect of Lemon Integropectin on Neuronal Cellular Model. *Antioxidants,* 2021, vol. 10, 669
- **PRESENTATO, A. ; PIACENZA, E. ; SCURRIA, A. ; ALBANESE, L. ; ZABINI, F. ; MENEGUZZO, F. ; NUZZO, D. ; PAGLIARO, M. ; MARTINO, D.C. ; ALDUINA, R. et al.** A New Water-Soluble Bactericidal Agent for the Treatment of Infections Caused by Gram-Positive and Gram-Negative Bacterial Strains. *Antibiotics,* 2020, vol. 9, 586
- **YAN, Y. ; THORPE, R.B.** Flow Regime Transitions Due to Cavitation in the Flow through an Orifice. *Int. J. Multiph. Flow,* 1990, vol. 16, 1023-1045
- **VICHARE, N.P. ; GOGATE, P.R. ; PANDIT, A.B.** Optimization of Hydrodynamic Cavitation Using a Model. *Chem. Eng. Technol.,* 2000, vol. 23, 683-690
- Hydrodynamic Cavitation-Assisted Processing of Vegetable Beverages: Review and the Case of Beer-Brewing. **ALBANESE, L. ; MENEGUZZO, F.** Production and Management of Beverages. Woodhead Publishing, 2019, 211-257